# EUROPEAN PATENT SPECIFICATION

(11) **EP 3 059 989 B1**
(45) Date of publication and mention of the grant of the patent: **12.02.2020**
(21) Application number: 14797756.5
(22) Date of filing: 05.05.2014
(51) Int. Cl.: H04W 4/70, H04L 29/06, G06F 21/60, H04W 4/08, H04W 12/04

(54) **METHOD FOR REALIZING SECURE COMMUNICATIONS AMONG MACHINE TYPE COMMUNICATION DEVICES AND NETWORK ENTITY**
VERFAHREN ZUR DURCHFÜHRUNG SICHERER KOMMUNIKATIONEN ZWISCHEN MASCHINENKOMMUNIKATIONSVORRICHTUNGEN UND EINER NETZWERKEINHEIT
PROCÉDÉ POUR EFFECTUER DES COMMUNICATIONS SÉCURISÉES ENTRE DES DISPOSITIFS DE COMMUNICATION DE TYPE MACHINE ET UNE ENTITÉ DE RÉSEAU

(30) Priority: 25.10.2013 CN 201310512463
(43) Date of publication of application: 24.08.2016
(73) Proprietor: ZTE Corporation, Shenzhen, Guangdong 518057 (CN)
(72) Inventor: YU, Wantao, Shenzhen Guangdong 518057 (CN)
(74) Representative: J A Kemp LLP
(86) International application number: PCT/CN2014/076774
(87) International publication number: WO 2014/183569

(56) References cited:
- WO-A1-2012/097883
- CN-A- 102 083 212
- CN-A- 102 572 818
- CN-A- 103 096 308
- US-A1- 2011 307 694
- US-A1- 2013 080 782
- US-A1- 2013 080 782
- "3rd Generation Partnership Project; Technical Specification Group Services and System Aspects; Security aspects of Machine-Type and other Mobile Data Applications Communications Enhancements; (Release 12)", 3GPP STANDARD; 3GPP TR 33.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.15.0, 30 September 2013 (2013-09-30), pages 1-115, XP050712804, [retrieved on 2013-09-30]

## Description

### Technical Field

The present invention relates to the technical field of communication, in particular to a method for realizing secure communication between machine type communication devices and a network entity.

### Background of the Related Art

Machine type communication (referred to as simply MTC) refers to a general name of a series of technologies and combinations thereof for realizing data communication and exchange of machine to machine and machine to man by applying a wireless communication technology. MTC contains two layers of meanings, herein the first layer of meaning is the machine itself, it is called as a smart device in the embedded field; and the second layer of meaning is the connection of machine to machine, the machines are connected together through a network. Machine type communication is applied in a very wide range such as smart measurement and remote monitoring etc., so as to enable human life to be more intelligent. Compared with traditional communication between man and man, MTC devices are huge in number, are used widely in application field and have a huge market prospect.

In the current 3rd Generation Partnership Project(3GPP) LTE (Long Term Evolution) and LTE-A (LTE Advanced) wireless communication network, D2D (Device to Device) direct communication is such a communication mode, herein subscriber devices perform direct Peer to Peer (P2P) communication by sharing/reusing wireless link (uplink or downlink) resources of the wireless communication network. In the current cellular mobile communication network based on infrastructures, a base station (BS, NB or eNB) is used as a central control node and is a unique access point for obtaining network service by mobile devices. All mobile devices can communicate with some certain base station in the network only through uplink or downlink channels in cellular systems. However, when multiple mobile devices get close to one another, if D2D direct communication between the mobile devices is supported, many benefits will be brought to the traditional cellular communication. These benefits include: a longer time for using device battery, a higher wireless resource use efficiency, a wider signal coverage range, a lower system interference level and the like. In the cellular networks which are enhanced by using the D2D technology, on one hand, the direct communication between the mobile devices can benefit from the centralized control structures of the cellular networks; and on the other hand, by utilizing high-quality D2D links (direct links from device to device), the transmission efficiency of the traditional cellular networks can be greatly improved. For an MTC system, communication between MTC devices which get close to one another through the D2D mode will decrease the network load caused by MTC communication.

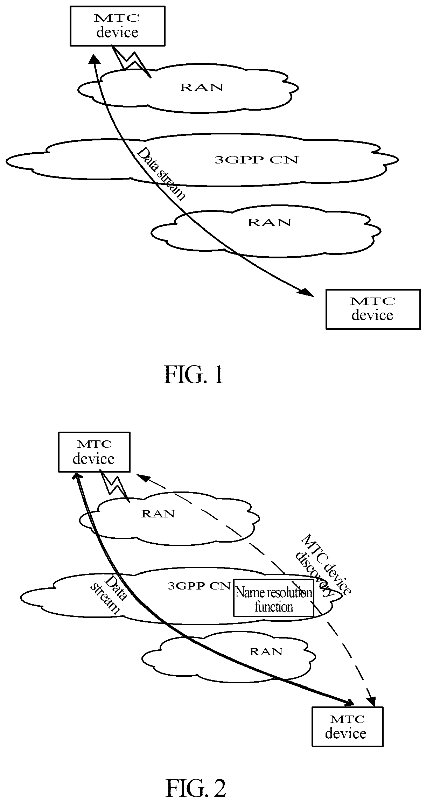

In the MTC system, the MTC devices can communicate with other MTC servers or MTC devices through a 3GPP network. When the MTC devices communicate through the 3GPP network, a session connection needs to be established between the MTC device and the MTC server or between the MTC device and the MTC device. From the perspective of protocols, the session connection between the MTC device and the MTC server or other MTC device belongs to a function of an application layer. For the communication between the MTC device and the MTC server, the session connection can be established through a related mobile communication process to realize information exchange between the MTC device and the MTC server. The communication between the MTC devices can be direct data communication on the application layer, as below shown in Fig. 1.

The communication between the MTC devices can also be indirect data communication on the application layer through the MTC server, as below shown in Fig. 2.

The document, "3rd Generation Partnership Project; Technical Specification Group Services and System Aspects; Security aspects of Machine-Type and other Mobile Data Applications Communications Enhancements; (Release 12), 3GPP STANDARD; 3GPP TR33.868, 2013-09-30, pages 1-115, XP050712804, has disclosed the related art of the present application.

### Summary of the Invention

In view of the situations of communication between MTC (Machine Type Communication) devices, in order to guarantee the security of communication between the MTC devices, a shared key is needed to be established between the communicating MTC devices to realize security control and management of communication between the MTC devices. In view of the situations of communication between the MTC devices, how to establish the shared key between the communicating MTC devices is a technical problem which needs to be urgently solved.

The present invention provides a method for realizing secure communication between machine type communication devices and a network entity as disclosed in independent method claims, a network entity and a MTC device as disclosed in independent apparatus claims.

Also provided is a method for realizing secure communication between machine type communication devices and a network entity, so as to guarantee the security problem of data communication between the MTC devices.

A method for realizing secure communication between machine type communication (MTC) devices provided by the present invention includes:
creating, by a network entity, an MTC device group for a directly-communicating MTC device, and saving MTC device group information corresponding to the MTC device group and MTC device information of an MTC device contained in the MTC device group which consists of MTC devices needing to directly communicate, herein the MTC device group information includes MTC device group identification information and MTC device group key information; wherein an MTC device group key is used as a shared key between different MTC devices in the MTC device group and is used for protecting secure communication between the different MTC devices in the MTC device group; and
sending, by the network entity, the MTC device group information of the MTC device group, to which the MTC device belongs, to the MTC device.

Optionally, the network entity is a Home Subscriber Server (HSS), and creating, by the HSS, an MTC device group for a directly-communicating MTC device under any one of the following situations includes:
creating the MTC device group for an MTC device which needs to directly communicate according to a creating request of an MTC subscriber;
creating the MTC device group for an MTC device which needs to directly communicate under a situation that a direct communication request initiated by the MTC device is received; and
creating the MTC device group for an MTC device which needs to directly communicate according to a request of an entity which manages communication between MTC devices.

Optionally, the network entity is an entity which manages communication between MTC devices, and creating, by the entity which manages communication between MTC devices, an MTC device group for a directly communicating MTC device under any one of the following situations includes:
creating, by the entity which manages communication between MTC devices, the MTC device group for an MTC device which needs to directly communicate under a situation that the entity which manages communication between MTC devices receives the direct communication request initiated by the MTC device; and
creating, by the entity which manages communication between MTC devices, the MTC device group for an MTC device which needs to directly communicate when the entity which manages communication between MTC devices establishes a direct communication between MTC devices.

Optionally, the entity which manages communication between MTC devices is a base station, a Mobility Management Entity (MME) or a Service GPRS Supporting Node (SGSN).

Optionally, sending, by the network entity, the MTC device group information of the MTC device group, to which the MTC device belongs, to the MTC device includes:
when the network entity creates the MTC device group for the MTC device which needs to directly communicate under the situation that the network entity receives the direct communication request initiated by the MTC device, after creating the MTC device group, sending the MTC device group information to the MTC device which initiates the direct communication request.

Optionally, sending, by the network entity, the MTC device group information of the MTC device group, to which the MTC device belongs, to the MTC device further includes:
when there is an MTC device initially attaching, checking, by the network entity, the MTC device group information of the MTC device according to MTC device information, and when the MTC device belongs to the created MTC device group, after the MTC device completes the attachment, sending the MTC device group information of the MTC device to the MTC device in a secure way.

Optionally, sending, by the network entity, the MTC device group information of the MTC device group, to which the MTC device belongs, to the MTC device includes:
after the network entity creates the MTC device group, sending, by the network entity, the MTC device group information to all MTC devices contained in the MTC device group.

Optionally, the method further includes:
generating, by the network entity, an encryption key and an integrity protection key according to the MTC device group key information;
wherein the MTC device group information includes MTC device group identification information, MTC device group key information, encryption key information and integrity protection key information.

Optionally, a method for realizing secure communication between machine type communication (MTC) devices includes:
receiving, by an MTC device, MTC device group information corresponding to an MTC device group which consists of MTC devices needing to directly communicate, from a network entity, herein the MTC device group information includes MTC device group identification information and MTC device group key information; wherein an MTC device group key is used as a shared key between different MTC devices in the MTC device group and is used for protecting secure communication between the different MTC devices in the MTC device group; and
using, by the MTC device, the MTC device group key information as a shared key with different MTC devices in the MTC device group, to which the MTC device belongs, for protecting secure communication with different MTC devices in the MTC device group to which the MTC device belongs.

Optionally, the method further includes the following steps:
generating, by the MTC device, an encryption key and an integrity protection key for protecting secure data transmission between MTC devices according to the MTC device group key information; and
performing, by the MTC device, secure MTC data transmission with different MTC devices in the MTC device group, to which the MTC device belongs, through the encryption key and the integrity protection key.

Optionally, the method further includes:
the MTC device group information further including an encryption key and an integrity protection key; and
performing, by the MTC device, secure MTC data transmission with different MTC devices in the MTC device group, to which the MTC device belongs, through the encryption key and the integrity protection key.

Also provided is a network entity including a group creating unit and a sending unit, herein:
the group creating unit is configured to create an MTC device group for a directly-communicating MTC device, and save MTC device group information corresponding to the MTC device group and MTC device information of an MTC device contained in the MTC device group which consists of MTC devices needing to directly communicate, herein the MTC device group information includes MTC device group identification information and MTC device group key information; wherein an MTC device group key is used as a shared key between different MTC devices in the MTC device group and is used for protecting secure communication between the different MTC devices in the MTC device group; and
the sending unit is configured to send the MTC device group information of the MTC device group, to which the MTC device belongs, to the MTC device.

Optionally, the group creating unit is set at a Home Subscriber Server (HSS), and the group creating unit creates an MTC device group for a directly-communicating MTC device in any one of the following ways:
the group creating unit creates the MTC device group for an MTC device which needs to directly communicate according to a creating request of an MTC subscriber;
the group creating unit creates the MTC device group for an MTC device which needs to directly communicate under a situation that a direct communication request initiated by the MTC device is received; and
the group creating unit creates the MTC device group for an MTC device which needs to directly communicate according to a request of an entity which manages communication between MTC devices.

Optionally, the group creating unit is set at an entity which manages communication between MTC devices, and the group creating unit creates an MTC device group for a directly-communicating MTC device in any one of the following ways:
the group creating unit creates the MTC device group for an MTC device which needs to directly communicate under a situation that the entity which manages communication between MTC devices receives a direct communication request initiated by the MTC device; and
the group creating unit creates the MTC device group for an MTC device which needs to directly communicate when the entity which manages communication between MTC devices establishes a direct communication between MTC devices.

Optionally, the entity which manages communication between MTC devices is a base station, a Mobility Management Entity (MME) or a Service GPRS Supporting Node (SGSN).

Optionally, the sending unit sends the MTC device group information of the MTC device group, to which the MTC device belongs, to the MTC device in the following way:
when the group creating unit creates the MTC device group for the MTC device which needs to directly communicate under the situation that the group creating unit receives the direct communication request initiated by the MTC device, after the group creating unit creates the MTC device group, the sending unit sends the MTC device group information to the MTC device which initiates the direct communication request.

Optionally, the sending unit is further configured to, when there is an MTC device initially attaching, check the MTC device group information of the MTC device according to MTC device information, and when the MTC device belongs to the created MTC device group, after the MTC device completes the attachment, send the MTC device group information of the MTC device group to the MTC device in a secure way.

Optionally, the sending unit sends the MTC device group information of the MTC device group, to which the MTC device belongs, to the MTC device in the following way:
after the group creating unit creates the MTC device group, the sending unit sends the MTC device group information to all MTC devices contained in the MTC device group.

Optionally, the network entity further includes a key unit, wherein:
the key unit is configured to generate an encryption key and an integrity protection key according to the MTC device group key information; and
the MTC device group information includes MTC device group identification information, MTC device group key information, encryption key information and integrity protection key.

Also provided is a machine type communication (MTC) device including a receiving unit and a communication unit, herein:
the receiving unit is configured to receive MTC device group information corresponding to an MTC device group which consists of MTC devices needing to directly communicate, to which the MTC device belongs, from a network entity, herein the MTC device group information includes MTC device group identification information and MTC device group key information; wherein an MTC device group key is used as a shared key between different MTC devices in the MTC device group and is used for protecting secure communication between the different MTC devices in the MTC device group; and
the communication unit is configured to use the MTC device group key information as a shared key with different MTC devices in the MTC device group, to which the MTC device belongs, for protecting secure communication with different MTC devices in the MTC device group to which the MTC device belongs.

Optionally, the communication unit is further configured to generate an encryption key and an integrity protection key for protecting secure data transmission between MTC devices according to the MTC device group key information; and perform secure MTC data transmission with different MTC devices in the MTC device group, to which the MTC device belongs, through the encryption key and the integrity protection key.

Optionally, the MTC device group information further includes an encryption key and an integrity protection key; the communication unit is configured to perform secure MTC data transmission with different MTC devices in the MTC device group, to which the MTC device belongs, through the encryption key and the integrity protection key.

To sum up, the embodiments of the present invention solve the problem of how to guarantee secure communication between an MTC device and another MTC device. When the MTC device directly communicate with any other MTC device, a secure transmission channel for data communication between MTC devices can be established according to the MTC device group information.

The invention is defined by the appended claims.

### Brief Description of Drawings

Fig. 1 is a schematic diagram of direct communication between MTC devices in related arts;
Fig. 2 is a schematic diagram of communication between MTC devices through an MTC server in related arts;
Fig. 3 is a schematic diagram of a system based on direction communication between MTC devices according to the embodiment of the present invention;
Fig. 4 is a schematic diagram of a system based on direction communication between MTC devices according to the embodiment of the present invention;
Fig. 5 is a schematic diagram of MTC device group information distribution based on direction communication between MTC devices according to the embodiment of the present invention;
Fig. 6 is a schematic diagram of MTC device group information distribution based on direction communication between MTC devices according to the embodiment of the present invention;
Fig. 7 is a schematic diagram of MTC device group information distribution based on direction communication between MTC devices according to the embodiment of the present invention;
Fig. 8 is a schematic diagram of MTC device group information distribution based on direction communication between MTC devices according to the embodiment of the present invention;
Fig. 9 is a structural schematic diagram of a network entity based on secure communication between MTC devices according to the embodiment of the present invention;
Fig. 10 is a structural schematic diagram of an MTC device based on secure communication between MTC devices according to the embodiment of the present invention.

### Preferred Embodiments of the Invention

In the embodiments of the present invention, MTC devices can be maintained and managed through a network entity. For example, MTC devices can be maintained and managed through an eNB, or MME or SGSN, or MTC devices can be maintained and managed through an HSS. For the situation that the MTC devices are maintained and managed through the HSS, when different MTC devices need to directly communicate, an MTC device group can be created at the HSS. The MTC device group consisting of the MTC devices which need to directly communicate can be created by an MTC subscriber, can also be initially created by an MTC device which initiates direct communication between the MTC devices, and can also be created by an entity which manages the communication between the MTC devices, such as an eNB, MME or SGSN. For example, the MTC subscriber can create at the HSS an MTC device group which needs to directly communicate. Or for example, an MTC device which initiates direct communication between the MTC devices sends information related to the direct communication between the MTC devices to a mobile communication network, and a related entity of the mobile communication network, such as ENB, MME or HSS etc, creates an MTC device group according to the information related to the direct communication. Or for example, an entity such as eNB, MME or SGSN etc which manages the communication between the MTC devices establishes direct communication between the MTC devices according to an actual situation of communication, and creates an MTC device group which needs to directly communicate.

Information of the MTC device and information of the MTC device group to which the MTC device belongs are saved in a mobile communication network entity, such as saving at an eNB, MME, SGSN or HSS etc. The MTC device group information includes MTC device group identification information and MTC device group key information. All MTC devices in the MTC device group have the same MTC device group information. When an MTC device belongs to a created MTC device group, the information of the MTC device group to which the MTC device belongs also needs to be saved on the MTC device, e.g., the information of the MTC device group to which the MTC device belongs is saved on the UICC of the MTC device. Specifically, for the situation that the MTC device group is maintained and managed by the HSS, maybe, after the MTC subscriber creates the MTC device group at the HSS, when an MTC device initially attaches to the network, the HSS checks the MTC device group information to which the MTC device belongs according to the MTC device information such as IMSI information, and when the MTC device belongs to a created MTC device group, after the MTC device completes an attachment process, the network sends the information of the MTC device group, to which the MTC device belongs, to the MTC device in a secure way for the purpose of saving, e.g., saving on the UICC of the MTC device. For the situation that the MTC device group is maintained and managed by the eNB, MME or SGSN, after the eNB, or MME or SGSN creates the MTC device group, the eNB, or MME or SGSN needs to send the MTC device group information securely to all MTC devices in the MTC device group.

In the embodiments of the present invention, the MTC device information saved by the mobile communication network entity such as eNB, MME, SGSN or HSS etc can include MTC device information, such as IMSI and IMEI, and can also include machine type communication capability information.

In order to solve the technical problem of how to guarantee the secure data transmission between MTC devices and other MTC devices, a method for realizing secure communication between MTC devices provided by the present invention includes:
I. For the situation that the MTC device group is maintained and managed by the HSS:
   An MTC device sends attachment request information to a network, herein the attachment request information includes MTC device information, such as IMSI;
   a network side MME sends authentication data request information to an HSS;
   the HSS firstly checks the MTC device information and the MTC device group information according to the saved MTC device information and MTC device group information, and when it is determined that the MTC device belongs to the MTC device group, the HSS generates authentication response data according to the MTC device information.

   The HSS sends the authentication response data to the MME.
   The MME and the MTC device complete mutual authentication.
   The MME sends the MTC device group information to the MTC device.
   The MTC device saves, maintains and manages the MTC device group information. An MTC device group key is used as a shared key between different MTC devices in the MTC device group and is used for protecting secure communication between different MTC devices in the MTC device group.
   During communication between the MTC devices, next-level keys such as an encryption key and an integrity protection key for protecting secure data transmission between the MTC devices can be generated through the MTC device group key according to the needs of the system.
   The MTC device and another MTC device perform secure MTC data transmission through the generated shared keys such as the encryption key and the integrity protection key.
II. For the situation that the MTC device group is maintained and managed by the mobile communication network entity such as eNB, MME or SGSN:
   An MTC device attaches to a mobile communication network.

A secure mobile communication connection is established between a mobile communication network entity and the MTC device.

The MTC device sends communication request information to the network, herein the communication request information includes device information of the MTC device, such as IMSI or IMEI etc, or simultaneously includes IMSI and IMEI; and further includes device information of another MTC device with which the MTC device needs to communicate, such as IMSI or IMEI etc, or simultaneously includes IMSI and IMEI.

The mobile communication network entity such as eNB, MME or SGSN creates an MTC device group according to the communication request information sent by the MTC device to the network, and saves MTC device group information, herein the MTC device group information includes MTC device group identification information and MTC device group key information.

The mobile communication network entity such as eNB, MME or SGSN sends the MTC device group information to the MTC device.

The MTC device saves, maintains and manages the MTC device group information. An MTC device group key is used as a shared key between different MTC devices in the MTC device group and is used for protecting secure communication between different MTC devices in the MTC device group.

During communication between the MTC devices, next-level keys such as an encryption key and an integrity protection key for protecting secure data transmission between the MTC devices can be generated through the MTC device group key according to the needs of the system.

The MTC device and another MTC device perform secure MTC data transmission through the generated shared keys such as the encryption key and the integrity protection key.

In the embodiments of the present invention, after one MTC device and a plurality of other MTC devices in the MTC device group establish secure MTC data transmission, the previously created MTC device group information can be directly used to establish a secure connection for direct communication between the other different MTC devices.

The embodiment of the present invention further provides a network entity, including a group creating unit and a sending unit, herein:
the group creating unit is configured to create an MTC device group for a directly-communicating MTC device, and save MTC device group information corresponding to the MTC device group and MTC device information of an MTC device contained in the MTC device group, herein the MTC device group information includes MTC device group identification information and MTC device group key information;
the sending unit is configured to send the MTC device group information of the MTC device group, to which the MTC device belongs, to the MTC device.

The group creating unit is set at a Home Subscriber Server (HSS), and the group creating unit creates an MTC device group for a directly-communicating MTC device in any one of the following ways:
(1) the group creating unit creates the MTC device group for an MTC device which needs to directly communicate according to a creating request of an MTC subscriber;
(2) the group creating unit creates the MTC device group for an MTC device which needs to directly communicate under a situation that a direct communication request initiated by the MTC device is received;
(3) the group creating unit creates the MTC device group for an MTC device which needs to directly communicate according to a request of an entity which manages communication between MTC devices.

The group creating unit is set at an entity which manages communication between MTC devices, and the group creating unit creates an MTC device group for a directly-communicating MTC devices in any one of the following ways:
(1) the group creating unit creates the MTC device group for an MTC device which needs to directly communicate under a situation that the entity which manages communication between MTC devices receives the direct communication request initiated by the MTC device;
(2) the group creating unit creates the MTC device group for an MTC device which needs to directly communicate when the entity which manages communication between MTC devices establishes a direct communication between MTC devices.

The entity which manages communication between MTC devices is a base station, a Mobility Management Entity MME or a Service GPRS Supporting Node SGSN.

The sending unit sends the MTC device group information of the MTC device group, to which the MTC device belongs, to the MTC device in the following way:
when the group creating unit creates the MTC device group for the MTC device which needs to directly communicate under the situation that the group creating unit receives the direct communication request initiated by the MTC device, after the group creating unit creates the MTC device group, the sending unit sends the MTC device group information to the MTC device which initiates the direct communication request.

The sending unit is further configured to, when there is an MTC device initially attaching, check the MTC device group information of the MTC device according to the MTC device information, and when the MTC device belongs to the created MTC device group, after the MTC device completes the attachment, send the MTC device group information of the MTC device to the MTC device in a secure way.

The sending unit sends the MTC device group information of the MTC device group, to which the MTC device belongs, to the MTC device in the following way:
after the group creating unit creates the MTC device group, the sending unit sends the MTC device group information to all MTC devices contained in the MTC device group.

The network entity further includes a key unit, herein:
the key unit is configured to generate an encryption key and an integrity protection key according to the MTC device group key information;
the MTC device group information includes MTC device group identification information, MTC device group key information, encryption key information and integrity protection key information.

The embodiment of the present invention further provides a machine type communication device, including a receiving unit and a communication unit, herein:
the receiving unit is configured to receive MTC device group information corresponding to an MTC device group, to which the MTC device belongs, from a network entity, herein the MTC device group information includes MTC device group identification information and MTC device group key information;
the communication unit is configured to use the MTC device group key information as a shared key with different MTC devices in the MTC device group, to which the MTC device belongs, for protecting secure communication with different MTC devices in the MTC device group to which the MTC device belongs.

The communication unit is further configured to generate an encryption key and an integrity protection key for protecting secure data transmission between MTC devices according to the MTC device group key information; and perform secure MTC data transmission with different MTC devices in the MTC device group, to which the MTC device belongs, through the encryption key and the integrity protection key.

The MTC device group information further includes an encryption key and an integrity protection key;
the communication unit is configured to perform secure MTC data transmission with different MTC devices in the MTC device group, to which the MTC device belongs, through the encryption key and the integrity protection key.

The present invention will be described below in detail by referring to the drawings in combination with the embodiments. It needs to be stated that the embodiments and the features of the embodiments in the present invention can be combined with one another under the situation of no conflict.

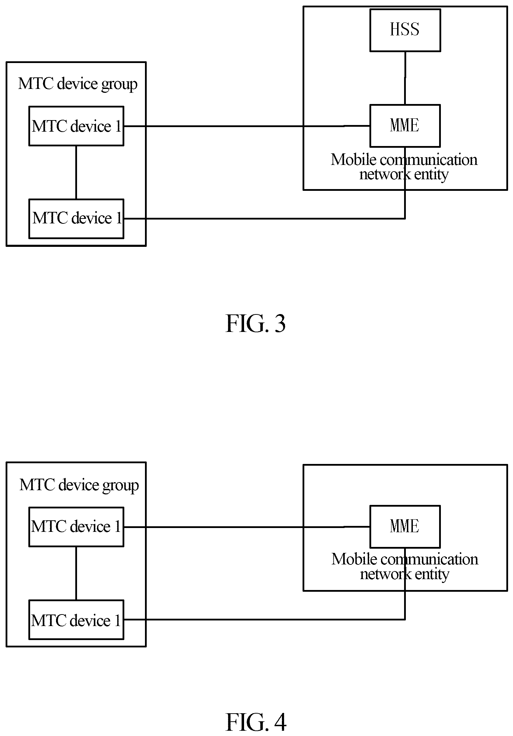

As shown in Fig. 3, a system based on direct communication between MTC devices according to the embodiment of the present invention includes different MTC devices which need to directly communicate, wherein the MTC devices are used for storing MTC device group information; an MME used for an NAS signaling processing; and an HSS for managing and maintaining the MTC device information and the MTC device group information.

As shown in Fig. 4, a system based on direct communication between MTC devices according to the embodiment of the present invention includes different MTC devices which need to directly communicate, wherein the MTC devices are used for storing MTC device group information; an MME used for an NAS signaling processing and managing and maintaining the MTC device and MTC device group information.

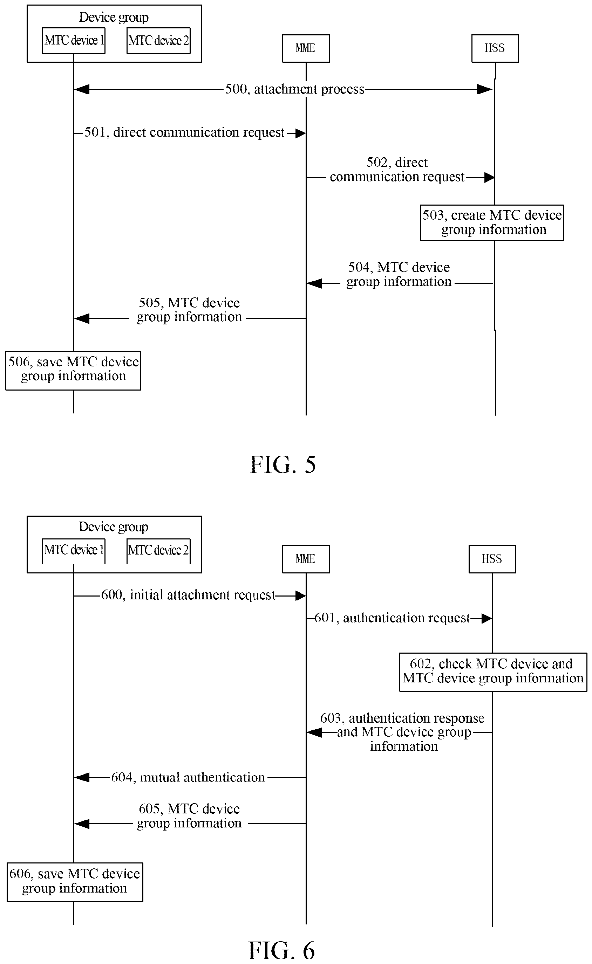

For the situation that the MTC device information and the MTC device group information are maintained and managed by the HSS, with respect to an MTC device which initiates direct communication, when the MTC device initially attaches, an MTC device group information distribution process, as shown in Fig. 5, includes the following steps that:
In Step 500, an MTC device completes an attachment process.

In Step 501, the MTC device sends MTC device direct communication request information to a mobile communication network, herein the direct communication request information includes information of the MTC device which needs to directly communicate, such as IMSI or IMEI etc, or simultaneously includes IMSI and IMEI; and further includes device information of another MTC device with which the MTC device needs to communicate, such as IMSI or IMEI etc, or simultaneously includes IMSI and IMEI.

In Step 502, an MME sends the direct communication request information to an HSS.

In Step 503, the HSS creates MTC device group information according to the direct communication request information.

The MTC device group information includes MTC device group identification information and MTC device group key information, herein the MTC device group key information is used for protecting the security of communication between the MTC devices.

When the MTC device group information is created, the HSS can generate an encryption key and an integrity protection key on the basis of the MTC device group key according to the needs of the system. Under this situation, the MTC device group information includes MTC device group identification information, MTC group key information, encryption key information and integrity protection key information. The encryption key and the integrity protection key are used for protecting the security of communication between the MTC devices.

In Step 504, the HSS sends the MTC device group information to the MME.

In Step 505, the MME sends the MTC device group information to the MTC device through a secure connection between the MME and the MTC device.

In Step 506, the MTC device saves the MTC device group information.

For the situation that the MTC device information and the MTC device group information are maintained and managed by the HSS, with respect to an MTC device which participates in direct communication, when the MTC device initially attaches, an MTC device group information distribution process, as shown in Fig. 6, includes the following steps that:
In Step 600, an MTC device sends attachment request information to a network, herein the attachment request information includes MTC device information such as IMSI or IMEI etc, or simultaneously includes IMSI and IMEI;
In Step 601, an MME sends authentication data request information to an HSS.
In Step 602, the HSS checks MTC device group information of an MTC device group to which the MTC device belongs according to the MTC device information.
In Step 603, the HSS sends both the MTC device information and authentication data to the MME.
In Step 604, the MME and the MTC device complete mutual authentication according to the authentication data.
In Step 605, the MME sends the MTC device group information to the MTC device through a secure connection between the MME and the MTC device.
In Step 606, the MTC device saves the MTC device group information.

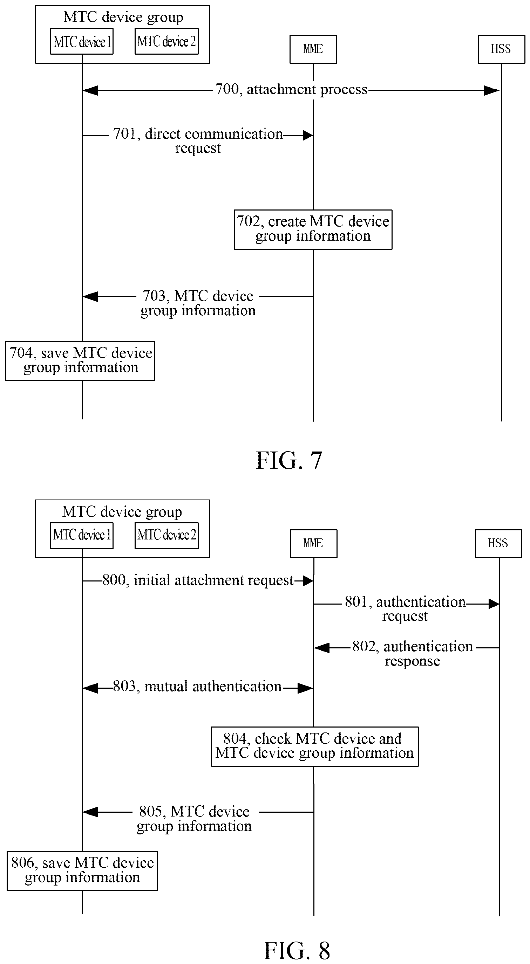

For the situation that the MTC device information and the MTC device group information are maintained and managed by the MME in the mobile communication network, when an MTC device needs to communicate with another MTC device, with respect to the MTC device which initiates direct communication, an MTC device group information distribution process, as shown in Fig. 7, includes the following steps that:
In Step 700, an MTC device sends attachment request information to a network, and completes a network attachment process, herein the attachment request information includes MTC device information such as IMSI.
In Step 701, the MTC device sends communication request information to the network.

The communication request information includes device information of the MTC device, such as IMSI or IMEI etc, or simultaneously includes IMSI and IMEI; and further includes device information of another MTC device with which the MTC device needs to communicate, such as IMSI or IMEI etc, or simultaneously includes IMSI and IMEI.

In Step 702, the MME creates an MTC device group according to the communication request information sent by the MTC device to the network, and saves MTC device group information, herein the MTC device group information includes MTC device group identification information and MTC device group key information.

The MTC device group information includes MTC device group identification information and MTC device group key information, herein the MTC device group key information is used for protecting the security of communication between the MTC devices.

When the MTC device group information is created, the MME can generate an encryption key and an integrity protection key on the basis of the MTC device group key according to the needs of the system. Under this situation, the MTC device group information includes MTC device group identification information, MTC group key information, encryption key information and integrity protection key information. The encryption key and the integrity protection key are used for protecting the security of communication between the MTC devices.

In Step 703, the MME sends the MTC device group information to the MTC device through a secure connection between the MME and the MTC device.

In Step 704, the MTC device saves the MTC device group information.

For the situation that the MTC device information and the MTC device group information are maintained and managed by the MME in the mobile communication network, when an MTC device needs to communicate with another MTC device, with respect to the MTC device which participates in direct communication, an MTC device group information distribution process, as shown in Fig. 8, includes the following steps that:
In Step 800, an MTC device sends attachment request information to a network, herein the attachment request information includes MTC device information such as IMSI or IMEI or simultaneously includes IMSI and IMEI.
In Step 801, an MME sends authentication data request information to an MME.
In Step 802, the HSS sends authentication data to the MME.
In Step 803, the MME and the MTC device complete mutual authentication according to the authentication data.
In Step 804, the MME checks MTC device group information of an MTC device group to which the MTC device belongs according to the MTC device information.
In Step 805, the MME sends the MTC device group information to the MTC device through a secure connection between the MME and the MTC device.
In Step 806, the MTC device saves the MTC device group information.

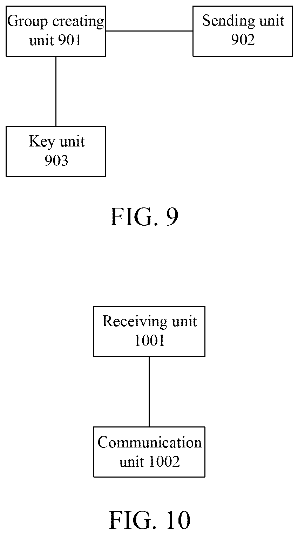

As shown in Fig. 9, the embodiment of the present invention further provides a network entity, including a group creating unit 901 and a sending unit 902, herein:
the group creating unit 901 is configured to create an MTC device group for a directly-communicating MTC device, and save MTC device group information corresponding to the MTC device group and MTC device information of an MTC device contained in the MTC device group, herein the MTC device group information includes MTC device group identification information and MTC device group key information;
the sending unit 902 is configured to send the MTC device group information of the MTC device group, to which the MTC device belongs, to the MTC device.

The group creating unit 901 is set at a Home Subscriber Server (HSS), and the group creating unit creates an MTC device group for a directly-communicating MTC devices under any one of the following situations, including:
(1) the group creating unit creates the MTC device group for an MTC device which needs to directly communicate according to a creating request of an MTC subscriber;
(2) the group creating unit creates the MTC device group for an MTC device which needs to directly communicate under a situation that a direct communication request initiated by the MTC device is received; and
(3) the group creating unit creates the MTC device group for an MTC device which needs to directly communicate according to a request of an entity which manages communication between MTC devices.

The group creating unit 901 is set at an entity which manages communication between MTC devices, and the group creating unit creates an MTC device group for a directly-communicating MTC devices under any one of the following situations, including:
(1) the group creating unit creates the MTC device group for an MTC device which needs to directly communicate under a situation that the entity which manages communication between MTC devices receives the direct communication request initiated by the MTC device; and
(2) the group creating unit creates the MTC device group for an MTC device which needs to directly communicate when the entity which manages communication between MTC devices establishes a direct communication between MTC devices.

The entity which manages communication between MTC devices is a base station, a Mobility Management Entity (MME) or a Service GPRS Supporting Node (SGSN).

The sending unit sends the MTC device group information of the MTC device group, to which the MTC device belongs, to the MTC device, including:
when the group creating unit 901 creates the MTC device group for the MTC device which needs to directly communicate under the situation that the group creating unit 901 receives the direct communication request initiated by the MTC device, after the group creating unit creates the MTC device group, the sending unit 902 sends the MTC device group information to the MTC device which initiates the direct communication request.

The sending unit 902 is further configured to, when there is an MTC device initially attaching, check the MTC device group information of the MTC device according to MTC device information, and when the MTC device belongs to the created MTC device group, after the MTC device completes the attachment, send the MTC device group information of the MTC device to the MTC device in a secure way.

The sending unit 902 sends the MTC device group information of the MTC device group, to which the MTC device belongs, to the MTC device, including:
after the group creating unit creates the MTC device group, the sending unit 902 sends the MTC device group information to all MTC devices contained in the MTC device group.

The network entity further includes a key unit 903, herein:
the key unit 903 is configured to generate an encryption key and an integrity protection key according to the MTC device group key information; and
the MTC device group information includes MTC device group identification information, MTC device group key information, encryption key information and integrity protection key information.

As shown in Fig. 10, the embodiment of the present invention further provides a machine type communication MTC device, including a receiving unit 1001 and a communication unit 1002, herein:
the receiving unit 1001 is configured to receive MTC device group information corresponding to an MTC device group, to which the MTC device belongs, from a network entity, herein the MTC device group information includes MTC device group identification information and MTC device group key information;
the communication unit 1002 is configured to use the MTC device group key information as a shared key with different MTC devices in the MTC device group, to which the MTC device belongs, for protecting secure communication with different MTC devices in the MTC device group to which the MTC device belongs.

The communication unit 1002 is further configured to generate an encryption key and an integrity protection key for protecting secure data transmission between MTC devices according to the MTC device group key information; and perform secure MTC data transmission with different MTC devices in the MTC device group, to which the MTC device belongs, through the encryption key and the integrity protection key.

The MTC device group information further includes an encryption key and an integrity protection key; and
the communication unit 1002 is configured to perform secure MTC data transmission with different MTC devices in the MTC device group, to which the MTC device belongs, through the encryption key and the integrity protection key.

One ordinary skilled in the art can understand that all or partial steps in the above-mentioned methods can be completed by relevant hardware instructed by a program, and the program can be stored in a computer readable storage medium such as a read only memory, a magnetic disk or a compact disk etc. Optionally, all or partial steps of the above-mentioned embodiments can also be implemented by using one or more integrated circuits. Correspondingly, each module/unit in the above-mentioned embodiments can be implemented by means of hardware, and can also be implemented by means of a software function module. The present invention is not limited to combinations of hardware and software in any specific form.

The embodiments described above are just preferred embodiments of the present invention and are not used for limiting the present invention. For one skilled in the art, the present invention may have various modifications and variations. However, all modifications, equivalent replacements and improvements made within the essence and the principle of the present invention shall also be included in the protection range of the present invention.

### Industrial Applicability

The embodiments of the present invention solve the problem of how to guarantee secure communication between an MTC device and another MTC device. When the MTC device directly communicate with any other MTC device, a secure transmission channel for data communication between MTC devices can be established according to the MTC device group information.

## Claims

1. A method for realizing secure communication between machine type communication (MTC) devices, comprising:
receiving, by a network entity, a direct communication request from a directly-communicating MTC device, wherein the direct communication request contains information of the directly-communicating MTC device and information of another MTC device with which the directly-communicating MTC device needs to directly communicate; wherein the directly-communicating MTC device and the another MTC device are part of an established MTC group;
creating, by the network entity, an MTC device group for the directly-communicating MTC device, and saving MTC device group information corresponding to the created MTC device group and MTC device information of MTC devices contained in the created MTC device group which consists of the MTC devices needing to directly communicate, wherein the MTC device group information comprises MTC device group identification information and MTC device group key information; wherein an MTC device group key is used as a shared key between different MTC devices in the created MTC device group and is used for protecting secure communication between the different MTC devices in the created MTC device group;
the method further comprising:
generating, by the network entity, an encryption key on basis of the MTC device group key information, and the MTC device group information further comprises the encryption key; and
sending, by the network entity, the MTC device group information of the created MTC device group to all MTC devices contained in the created MTC device group, which then establish a secure connection for direct communication using the encryption key contained in the MTC device group information.

2. The method according to claim 1, wherein:
the network entity is a Home Subscriber Server (HSS), and creating, by the HSS, an MTC device group for a directly-communicating MTC device under any one of the following situations comprises:
creating the MTC device group for an MTC device which needs to directly communicate according to a creating request of an MTC subscriber;
creating the MTC device group for an MTC device which needs to directly communicate under a situation that a direct communication request initiated by the MTC device is received; and
creating the MTC device group for an MTC device which needs to directly communicate according to a request of an entity which manages communication between MTC devices.

3. The method according to claim 1, wherein:
the network entity is an entity which manages communication between MTC devices, and creating, by the entity which manages communication between MTC devices, an MTC device group for a directly-communicating MTC device under any one of the following situations comprises:
creating, by the entity which manages communication between MTC devices, the MTC device group for an MTC device which needs to directly communicate under a situation that the entity which manages communication between MTC devices receives the direct communication request initiated by the MTC device; and
creating, by the entity which manages communication between MTC devices, the MTC device group for an MTC device which needs to directly communicate when the entity which manages communication between MTC devices establishes a direct communication between MTC devices,
and, wherein the entity which manages communication between MTC devices is a base station, a Mobility Management Entity (MME) or a Service GPRS Supporting Node (SGSN).

4. The method according to any one of claims 2-3, wherein sending, by the network entity, the MTC device group information of the MTC device group, to which the MTC device belongs, to the MTC device comprises:
when the network entity creates the MTC device group for the MTC device which needs to directly communicate under the situation that the network entity receives the direct communication request initiated by the MTC device, after creating the MTC device group, sending the MTC device group information to the MTC device which initiates the direct communication request,
and, wherein sending, by the network entity, the MTC device group information of the MTC device group, to which the MTC device belongs, to the MTC device further comprises:
when there is an MTC device initially attaching, checking, by the network entity, the MTC device group information of the MTC device according to MTC device information, and when the MTC device belongs to the created MTC device group, after the MTC device completes the attachment, sending the MTC device group information of the MTC device to the MTC device in a secure way.

5. A method for realizing secure communication between machine type communication (MTC) devices, comprising:
sending, by an MTC device, a direct communication request to a network entity, wherein the direct communication request contains information of the MTC device and information of another MTC device with which the MTC device needs to directly communicate; wherein the MTC device and the another MTC device are part of an established MTC group;
receiving, by the MTC device, MTC device group information corresponding to an created MTC device group which consists of MTC devices needing to directly communicate, from the network entity, wherein the MTC device group information comprises MTC device group identification information, MTC device group key information and an encryption key generated based on the MTC device group key information; wherein an MTC device group key is used as a shared key between different MTC devices in the created MTC device group and the encryption key is used for protecting secure communication between the different MTC devices in the created MTC device group; and
using, by the MTC device, the encryption key for protecting secure direct communication with the another MTC device in the created MTC device group to which the MTC device belongs.

6. A network entity, comprising a group creating unit and a sending unit, wherein:
the group creating unit (901) is configured to:
receive a direct communication request from a directly-communicating MTC device, wherein the direct communication request contains information of the directly-communicating MTC device and information of another MTC device with which the directly-communicating MTC device needs to directly communicate; wherein the directly-communicating MTC device and the another MTC device are part of an established MTC group;
create an MTC device group for the directly-communicating MTC device, and save MTC device group information corresponding to the created MTC device group and MTC device information of MTC devices contained in the MTC device group which consists of the MTC devices needing to directly communicate, wherein the MTC device group information comprises MTC device group identification information and MTC device group key information; wherein an MTC device group key is used as a shared key between different MTC devices in the created MTC device group and is used for protecting secure communication between the different MTC devices in the created MTC device group;
wherein the group creating unit (901) is further configured to generate an encryption key on basis of the MTC device group key information, and save the encryption key in the MTC device group information;
and
the sending unit (902) is configured to send the MTC device group information of the MTC device group to all MTC devices contained in the created MTC device group, which then establish a secure connection for direct communication using the encryption key contained in the MTC device group information.

7. The network entity according to claim 6, wherein:
the group creating unit (901) is set at a Home Subscriber Server (HSS), and the group creating unit creates an MTC device group for a directly-communicating MTC device in any one of the following ways:
creating the MTC device group for an MTC device which needs to directly communicate according to a creating request of an MTC subscriber;
creating the MTC device group for an MTC device which needs to directly communicate under a situation that a direct communication request initiated by the MTC device is received; and
creating the MTC device group for an MTC device which needs to directly communicate according to a request of an entity which manages communication between MTC devices.

8. The network entity according to claim 6, wherein:
the group creating unit (901) is set at an entity which manages communication between MTC devices, and the group creating unit creates an MTC device group for a directly-communicating MTC device in any one of the following ways:
creating the MTC device group for an MTC device which needs to directly communicate under a situation that the entity which manages communication between MTC devices receives the direct communication request initiated by the MTC device; and
creating the MTC device group for an MTC device which needs to directly communicate when the entity which manages communication between MTC devices establishes a direct communication between MTC devices,
and, wherein the entity which manages communication between MTC devices is a base station, a Mobility Management Entity (MME) or a Service GPRS Supporting Node (SGSN).

9. The network entity according to claims 7 or 8, wherein the sending unit (902) sends the MTC device group information of the MTC device group, to which the MTC device belongs, to the MTC device in the following way:
when the group creating unit creates the MTC device group for the MTC device which needs to directly communicate under the situation that the group creating unit receives the direct communication request initiated by the MTC device, after the group creating unit creates the MTC device group, the sending unit sends the MTC device group information to the MTC device which initiates the direct communication request,
and, wherein:
the sending unit is further configured to, when there is an MTC device initially attaching, check the MTC device group information of the MTC device according to MTC device information, and when the MTC device belongs to the created MTC device group, after the MTC device completes the attachment, send the MTC device group information of the MTC device to the MTC device in a secure way.

10. A Machine Type Communication (MTC) device, comprising a receiving unit (1001) and a communication unit (1002), wherein:
the communication unit (1002) is configured to send a direct communication request to a network entity, wherein the direct communication request contains information of the MTC device and information of another MTC device with which the MTC device needs to directly communicate; wherein the MTC device and the another MTC device are part of an established MTC group;
the receiving unit (1001) is configured to receive MTC device group information corresponding to an created MTC device group which consists of the MTC devices needing to directly communicate, to which the MTC device belongs, from the network entity, wherein the MTC device group information comprises MTC device group identification information and MTC device group key information and an encryption key generated based on the MTC device group key information; wherein an MTC device group key is used as a shared key between different MTC devices in the created MTC device group and the encryption key is used for protecting secure communication between the different MTC devices in the created MTC device group; and
the communication unit (1002) is further configured to use the encryption key for protecting secure direct communication with the another MTC device in the created MTC device group to which the MTC device belongs.

## Patentansprüche

1. Verfahren zum Realisieren einer sicheren Kommunikation zwischen Maschinenkommunikations (MTC)-Vorrichtungen, umfassend:
Empfangen, durch eine Netzwerkeinheit, einer direkten Kommunikationsanforderung von einer direkt kommunizierenden MTC-Vorrichtung, wobei die direkte Kommunikationsanforderung Informationen der direkt kommunizierenden MTC-Vorrichtung und Informationen einer anderen MTC-Vorrichtung enthält, mit dem die direkt kommunizierende MTC-Vorrichtung direkt kommunizieren muss;
wobei die direkt kommunizierende MTC-Vorrichtung und die andere MTC-Vorrichtung Teil einer eingerichteten MTC-Gruppe sind;
Erstellen, durch die Netzwerkeinheit, einer MTC-Vorrichtungsgruppe für die direkt kommunizierende MTC-Vorrichtung und Speichern von MTC-Vorrichtungsgruppeninformationen, die der erstellten MTC-Vorrichtungsgruppe entsprechen und MTC-Vorrichtungsinformationen von MTC-Vorrichtungen, die in der erstellten MTC-Vorrichtungsgruppe enthalten sind, die aus den MTC-Vorrichtungen besteht, die direkt kommunizieren müssen, wobei die MTC-Vorrichtungsgruppeninformationen MTC-Vorrichtungsgruppenidentifizierungsinformationen und MTC-Vorrichtungsgruppenschlüsselinformationen umfassen; wobei ein MTC-Vorrichtungsgruppenschlüssel als ein gemeinsamer Schlüssel zwischen verschiedenen MTC-Vorrichtungen in der erstellten MTC-Vorrichtungsgruppe verwendet wird und zum Schutz sicherer Kommunikation zwischen den verschiedenen MTC-Vorrichtungen in der erstellten MTC-Vorrichtungsgruppe verwendet wird;
das Verfahren ferner umfassend:
Erzeugen, durch die Netzwerkeinheit, eines Verschlüsselungsschlüssels basierend auf den MTC-Vorrichtungsgruppenschlüsselinformationen, und die MTC-Vorrichtungsgruppeninformation ferner den Verschlüsselungsschlüssel umfassen; und
Senden, durch die Netzwerkeinheit, der MTC-Vorrichtungsgruppeninformationen des erstellten MTC-Vorrichtungsgruppe zu allen MTC-Vorrichtungen in der erstellten MTC-Vorrichtungsgruppe, die dann eine sichere Verbindung für die direkte Kommunikation unter Verwendung des in den MTC-Vorrichtungsgruppeninformationen enthaltenen Verschlüsselungsschlüssels einrichten.

2. Verfahren nach Anspruch 1, wobei:
die Netzwerkeinheit ein Home-Teilnehmer-Server (HSS) ist und Erstellen, durch den HSS, einer MTC-Vorrichtungsgruppe für eine direkt kommunizierende MTC-Vorrichtung in einer der folgenden Situationen umfasst:
Erstellen der MTC-Vorrichtungegruppe für eine MTC-Vorrichtung, die gemäß einer Erstellungsanforderung eines MTC-Teilnehmers direkt kommunizieren muss;
Erstellen der MTC-Vorrichtungsgruppe für eine MTC-Vorrichtung, die in einer Situation, in der eine vom MTC-Vorrichtung eingeleitete direkte Kommunikationsanforderung empfangen wird, direkt kommunizieren muss; und
Erstellen der MTC-Vorrichtungsgruppe für eine MTC-Vorrichtung, die gemäß einer Anforderung einer Einheit, die die Kommunikation zwischen MTC-Vorrichtungen verwaltet, direkt kommunizieren muss.

3. Verfahren nach Anspruch 1, wobei:
die Netzwerkeinheit eine Einheit ist, die Kommunikation zwischen MTC-Vorrichtungen verwaltet, und Erstellen, durch die Einheit, die Kommunikation zwischen MTC-Vorrichtungen verwaltet, einer MTC-Vorrichtungsgruppe für eine direkt kommunizierende MTC-Vorrichtung in einer der folgenden Situationen umfasst:
Erstellen, durch die Einheit, die Kommunikation zwischen MTC-Vorrichtungen verwaltet, der MTC-vorrichtungsgruppe für eine MTC-Vorrichtung, die direkt kommunizieren muss, in einer Situation, dass die Einheit, die Kommunikation zwischen MTC-Vorrichtungen, die direkte Kommunikationsanfrage empfängt, die von der MTC-Vorrichtung eingeleitet wird; und
Erstellen, durch die Einheit, die Kommunikation zwischen MTC-Vorrichtungen verwaltet, der MTC-Vorrichtungsgruppe für eine MTC-Vorrichtung, die direkt kommunizieren muss, wenn die Einheit, die Kommunikation zwischen MTC-Vorrichtungen verwaltet, eine direkte Kommunikation zwischen MTC-Vorrichtungen einrichtet,
und, wobei die Einheit, die Kommunikation zwischen MTC-Vorrichtungen verwaltet, eine Basisstation, eine Mobilitätsmanagementeinheit (MME) oder ein Service-GPRS-Unterstützungsknoten (SGSN) ist.

4. Verfahren nach einem der Ansprüche 2 bis 3, wobei Senden, durch die Netzwerkeinheit, der MTC-Vorrichtungsgruppeninformationen der MTC-Vorrichtungsgruppe, zu der die MTC-Vorrichtung gehört, an das MTC-Vorrichtung umfasst:
wenn die Netzwerkeinheit die MTC-Vorrichtungsgruppe für die MTC-Vorrichtung erstellt, die direkt kommunizieren muss, in der Situation, dass die Netzwerkeinheit die von der MTC-Vorrichtung eingeleitete direkte Kommunikationsanforderung empfängt, nach dem Erstellen der MTC-Vorrichtungsgruppe die MTC-Vorrichtungsgruppeninformationen an die MTC-Vorrichtung sendet, die die direkte Kommunikationsanforderung einleitet,
und wobei Senden, durch die Netzwerkeinheit, der MTC-Vorrichtungsgruppeninformationen der MTC-Vorrichtungsgruppe, zu der die MTC-Vorrichtung gehört, zu der MTC-Vorrichtung ferner umfasst:
wenn sich eine MTC-Vorrichtung erstmals anlegt, Prüfen, durch die Netzwerkeinheit, der MTC-Vorrichtungsgruppeninformationen der MTC-Vorrichtung gemäß MTC-Vorrichtungsinformationen, und wenn die MTC-Vorrichtung zur erstellten MTC-Vorrichtungegruppe gehört, nachdem die MTC-Vorrichtung die Anlegung abgeschlossen hat, Senden der MTC-Vorrichtungsgruppeninformationen der MTC-Vorrichtung an die MTC-Vorrichtung auf eine sichere Weise.

5. Verfahren zum Realisieren einer sicheren Kommunikation zwischen Maschinenkommunikations (MTC)-Vorrichtungen, umfassend:
Senden, durch eine MTC-Vorrichtung, einer direkten Kommunikationsanforderung an eine Netzwerkeinheit, wobei die direkte Kommunikationsanforderung Informationen der MTC-Vorrichtung und Informationen einer anderen MTC-Vorrichtung enthält, mit denen die MTC-Vorrichtung direkt kommunizieren muss;
wobei die MTC-Vorrichtung und die andere MTC-Vorrichtung Teil einer eingerichteten MTC-Gruppe sind;
Empfangen, durch die MTC-Vorrichtung, von MTC-Vorrichtungsgruppeninformationen, die einer erstellten MTC-Vorrichtungsgruppe entsprechen, die aus MTC-Vorrichtungen besteht, die direkt von der Netzwerkeinheit kommunizieren müssen, wobei die MTC-Vorrichtungsgruppeninformationen MTC-Vorrichtungsgruppenidentifizierungsinformationen, MTC-Vorrichtungegruppenschlüsselinformationen und einen Verschlüsselungschlüssel umfassen, basierend auf den MTC-Vorrichtungsgruppenschlüsselinformationen; wobei ein MTC-Vorrichtungsgruppenschlüssel als ein gemeinsamer Schlüssel zwischen verschiedenen MTC-Vorrichtungen in der erstellten MTC-Vorrichtungsgruppe verwendet wird und der Verschlüsselungsschlüssel zum Schutz der sicheren Kommunikation zwischen den verschiedenen MTC-Vorrichtungen in der erstellten MTC-Vorrichtungsgruppe verwendet wird; und
Verwenden, durch die MTC-Vorrichtung, des Verschlüsselungsschlüssels zum Schutz der sicheren direkten Kommunikation mit der anderen MTC-Vorrichtung in der erstellten MTC-Vorrichtungsgruppe, zu der die MTC-Vorrichtung gehört.

6. Netzwerkeinheit, umfassend eine Gruppenerstellungseinheit und eine Sendeeinheit, wobei:
die Gruppenerstellungseinheit (901) konfiguriert ist, um:
eine direkte Kommunikationsanforderung von einer direkt kommunizierenden MTC-Vorrichtung zu empfangen, wobei die direkte Kommunikationsanforderung Informationen über die direkt kommunizierende MTC-Vorrichtung und Informationen über eine andere MTC-Vorrichtung enthält, mit der die direkt kommunizierende MTC-Vorrichtung direkt kommunizieren muss; wobei die direkt kommunizierende MTC-Vorrichtung und die andere MTC-Vorrichtung Teil einer eingerichteten MTC-Gruppe sind;
eine MTC-Vorrichtungsgruppe für die direkt kommunizierende MTC-Vorrichtung zu erstellen, und MTC-Vorrichtungsgruppeninformationen zu speichern, die der erstellten MTC-Vorrichtungsgruppe und MTC-Vorrichtungsgruppeninformationen der MTC-Vorrichtungen entsprechen, die in der MTC-Vorrichtungsgruppe enthalten sind, die aus den MTC-Vorrichtungen bestehen, die direkt kommunizieren müssen, wobei die MTC-Vorrichtungsgruppeninformationen MTC-Vorrichtungegruppenidentifizierungsinformationen und MTC-Vorrichtungsgruppenschlüssel umfassen; wobei ein MTC-Vorrichtungsgruppenschlüssel als gemeinsamer Schlüssel zwischen verschiedenen MTC-Vorrichtungen in der erstellten MTC-Vorrichtungsgruppe verwendet wird und zum Schutz der sicheren Kommunikation zwischen den verschiedenen MTC-Vorrichtungen in der erstellten MTC-Vorrichtungsgruppe verwendet wird;
wobei die Gruppenerstellungseinheit (901) ferner konfiguriert ist, um einen Verschlüsselungsschlüssel basierend auf den MTC-Vorrichtungsgruppenschlüsselinformationen zu erzeugen und den Verschlüsselungsschlüssel in den MTC-Vorrichtungsgruppeninformationen zu speichern;
und
die Sendeeinheit (902) konfiguriert ist, um die MTC-Vorrichtungsgruppeninformationen der MTC-Vorrichtungsgruppe an alle MTC-Vorrichtungen zu senden, die in der erstellten MTC-Vorrichtungsgruppe enthalten sind, die dann eine sichere Verbindung für direkte Kommunikation einrichten, unter Verwendung des Verschlüsselungsschlüssels, der in den MTC-Vorrichtungsgruppeninformation enthalten ist.

7. Netzwerkeinheit nach Anspruch 6, wobei:
die Gruppenerstellungseinheit (901) als ein Home-Teilnehmer-Server (HSS) eingestellt ist, und die Gruppenerstellungseinheit eine MTC-Vorrichtungsgruppe für eine direkt kommunizierende MTC-Vorrichtung in einer der folgenden Weisen erstellt:
Erstellen der MTC-Vorrichtungsgruppe für eine MTC-Vorrichtung, die gemäß einer Erstellungsanforderung eines MTC-Teilnehmers direkt kommunizieren muss;
Erstellen der MTC-Vorrichtungsgruppe für eine MTC-Vorrichtung, die in einer Situation, dass eine direkte Kommunikationsanforderung die von der MTC-Vorrichtung eingeleitet wird, empfangen wird; und, die von der gemäß einer Erstellungsanforderung eines MTC-Teilnehmers direkt kommunizieren muss;
Erstellen der MTC-Vorrichtungsgruppe für eine MTC-Vorrichtung, die gemäß einer Anforderung einer Einheit, die Kommunikation zwischen MTC-Vorrichtungen verwaltet, direkt kommunizieren muss.

8. Netzwerkeinheit nach Anspruch 6, wobei:
die Gruppenerstellungseinheit (901) auf eine Einheit eingestellt ist, die Kommunikation zwischen MTC-Vorrichtungen verwaltet, und die Gruppenerstellungseinheit eine MTC-Vorrichtungsgruppe für eine direkt kommunizierende MTC-Vorrichtung auf eine der folgenden Weisen erstellt:
Erstellen der MTC-Vorrichtungegruppe für ein MTC-Vorrichtung, die direkt in einer Kommunikation in einer Situation direkt kommunizieren muss, dass die Einheit, die die Kommunikation zwischen MTC-Vorrichtungen verwaltet, die direkte Kommunikationsanforderung empfängt, die von der MTC-Vorrichtung eingeleitet wurde; und
Erstellen der MTC-Vorrichtungsgruppe für eine MTC-Vorrichtung, die direkt kommunizieren muss, wenn die Einheit, die die Kommunikation zwischen MTC-Vorrichtungen verwaltet, eine direkte Kommunikation zwischen MTC-Vorrichtungen einrichtet,
und wobei die Einheit, die die Kommunikation zwischen MTC-Vorrichtungen verwaltet, eine Basisstation, eine Mobilitätsmanagement-Einheit (MME) oder ein Service-GPRS-Unterstützungsknoten (SGSN) ist.

9. Netzwerkeinheit nach Anspruch 7 oder 8, wobei die Sendeeinheit (902) die MTC-Vorrichtungsgruppeninformationen der MTC-Vorrichtungsgruppe, zu der die MTC-Vorrichtung gehört, zu der MTC-Vorrichtung in der folgenden Weise sendet:
wenn die Gruppenerstellungseinheit die MTC-Vorrichtungsgruppe für die MTC-Vorrichtung erstellt, die in einer Situation direkt kommunizieren muss, dass die Gruppenerstellungseinheit die von der MTC-Vorrichtung eingeleitete direkte Kommunikationsanforderung empfängt, nachdem die Gruppenerstellungseinheit die MTC-Vorrichtungsgruppe erstellt hat, die Sendeeinheit die MTC-Vorrichtungsinformationen an die MTC-Vorrichtung sendet, die die direkte Kommunikationsanforderung einleitet,
und wobei:
die Sendeeinheit ferner konfiguriert ist, um, wenn sich eine MTC-Vorrichtung erstmals anlegt, Prüfen, durch die Netzwerkeinheit, der MTC-Vorrichtungsgruppeninformationen der MTC-Vorrichtung gemäß MTC-Vorrichtungsinformationen, und wenn die MTC-Vorrichtung zur erstellten MTC-Vorrichtungegruppe gehört, nachdem die MTC-Vorrichtung die Anlegung abgeschlossen hat, Senden der MTC-Vorrichtungsgruppeninformationen der MTC-Vorrichtung an die MTC-Vorrichtung auf eine sichere Weise.

10. Maschinentyp-Kommunikations (MTC) -Vorrichtung, umfassend eine Empfangseinheit (1001) und eine Kommunikationseinheit (1002), wobei:
die Kommunikationseinheit (1002) konfiguriert ist, um eine direkte Kommunikationsanforderung an eine Netzwerkeinheit zu senden, wobei die direkte Kommunikationsanforderung Informationen der MTC-Vorrichtung und Informationen einer anderen MTC-Vorrichtung enthält, mit der die MTC-Vorrichtung direkt kommunizieren muss; wobei die MTC-Vorrichtung und die andere MTC-Vorrichtung Teil einer eingerichteten MTC-Gruppe sind;
die Empfangseinheit (1001) konfiguriert ist, um MTC-Vorrichtungsgruppeninformationen zu empfangen, die einer erstellten MTC-Vorrichtungegruppe entsprechen, die aus MTC-Vorrichtungen besteht, die direkt kommunizieren müssen, zu der die MTC-Vorrichtung gehört, von der Netzwerkeinheit, wobei die MTC-Vorrichtungsgruppeninformationen MTC-Vorrichtungsgruppenidentifizierungsinformationen und MTC-Vorrichtungsgruppenschlüsselinformationen und einen basierend auf den MTC-Vorrichtungsgruppenschlüsselinformationen erzeugten Verschlüsselungsschlüssel; wobei ein MTC-Vorrichtungsgruppenschlüssel als ein gemeinsamer Schlüssel zwischen verschiedenen MTC-Vorrichtungen in der erstellten MTC-Vorrichtungsgruppe verwendet wird und der Verschlüsselungsschlüssel zum Schutz der sicheren Kommunikation zwischen den verschiedenen MTC-Vorrichtungen in der erstellten MTC-Vorrichtungsgruppe verwendet wird; und
die Kommunikationseinheit (1002) ferner konfiguriert ist, um den Verschlüsselungsschlüssel zum Schutz der sicheren direkten Kommunikation mit der anderen MTC-Vorrichtung in der erstellten MTC-Vorrichtungsgruppe zu verwenden, zu der die MTC-Vorrichtung gehört.

## Revendications

1. Procédé pour réaliser une communication sécurisée entre des dispositifs de communication de type machine (MTC), comprenant :
la réception, par une entité de réseau, d'une demande de communication directe à partir d'un dispositif MTC à communication directe, la demande de communication directe contenant des informations du dispositif MTC à communication directe et des informations d'un autre dispositif MTC avec lequel le dispositif MTC à communication directe doit communiquer directement ;
le dispositif MTC à communication directe et l'autre dispositif MTC faisant partie d'un groupe MTC établi ;
la création, par l'entité de réseau, d'un groupe de dispositifs MTC pour le dispositif MTC à communication directe, et l'enregistrement d'informations du groupe de dispositifs MTC correspondant au groupe de dispositifs MTC créé et d'informations de dispositif MTC des dispositifs MTC contenus dans le groupe de dispositifs MTC créé qui est constitué par les dispositifs MTC devant communiquer directement, les informations du groupe de dispositifs MTC comprenant des informations d'identification du groupe de dispositifs MTC et des informations de clé du groupe de dispositifs MTC ; une clé du groupe de dispositifs MTC étant utilisée en tant que clé partagée entre différents dispositifs MTC dans le groupe de dispositifs MTC créé, et étant utilisée pour protéger une communication sécurisée entre les différents dispositifs MTC dans le groupe de dispositifs MTC créé ;
le procédé comprenant en outre :
la génération, par l'entité de réseau, d'une clé de cryptage à partir des informations de clé du groupe de dispositifs MTC, et les informations du groupe de dispositifs MTC comprenant en outre la clé de cryptage ; et
l'envoi, par l'entité de réseau, des informations du groupe de dispositifs MTC du groupe de dispositifs MTC créé à tous les dispositifs MTC contenus dans le groupe de dispositifs MTC créé, qui établissent alors une connexion sécurisée pour une communication directe en utilisant la clé de cryptage contenue dans les informations du groupe de dispositifs MTC.

2. Procédé selon la revendication 1, dans lequel :
l'entité de réseau est un serveur d'abonné résidentiel (HSS), et la création, par l'HSS, d'un groupe de dispositifs MTC pour un dispositif MTC à communication directe dans l'une quelconque des situations suivantes comprend :
la création du groupe de dispositifs MTC pour un dispositif MTC qui doit communiquer directement selon une demande de création d'un abonné MTC ;
la création du groupe de dispositifs MTC pour un dispositif MTC qui doit communiquer directement dans une situation dans laquelle une demande de communication directe initiée par le dispositif MTC est reçue ; et
la création du groupe de dispositifs MTC pour un dispositif MTC qui doit communiquer directement selon une demande d'une entité qui gère la communication entre les dispositifs MTC.

3. Procédé selon la revendication 1, dans lequel :
l'entité de réseau est une entité qui gère la communication entre les dispositifs MTC, et la création, par l'entité qui gère la communication entre les dispositifs MTC, d'un groupe de dispositifs MTC pour un dispositif MTC à communication directe dans l'une quelconque des situations suivantes comprend :
la création, par une entité qui gère la communication entre les dispositifs MTC, du groupe de dispositifs MTC pour un dispositif MTC qui doit communiquer directement dans une situation dans laquelle l'entité qui gère la communication entre les dispositifs MTC reçoit la demande de communication directe initiée par le dispositif MTC ; et
la création, par l'entité qui gère la communication entre les dispositifs MTC, du groupe de dispositifs MTC pour un dispositif MTC qui doit communiquer directement lorsque l'entité qui gère la communication entre les dispositifs MTC établit une communication directe entre les dispositifs MTC,
et dans lequel l'entité qui gère la communication entre les dispositifs MTC est une station de base, une entité de gestion de mobilité (MME) ou un nœud de support du GPRS de desserte (SGSN).

4. Procédé selon l'une quelconque des revendications 2 à 3, dans lequel l'envoi, par l'entité de réseau, des informations du groupe de dispositifs MTC du groupe de dispositifs MTC, auquel le dispositif MTC appartient, au dispositif MTC comprend :
lorsque l'entité de réseau crée le groupe de dispositifs MTC pour le dispositif MTC qui doit communiquer directement dans la situation dans laquelle l'entité de réseau reçoit la demande de communication directe initiée par le dispositif MTC, après la création du groupe de dispositifs MTC, l'envoi des informations du groupe de dispositifs MTC au dispositif MTC qui initie la demande de communication directe,
et dans lequel l'envoi, par l'entité de réseau, des informations du groupe de dispositifs MTC du groupe de dispositifs MTC, auquel le dispositif MTC appartient, au dispositif MTC comprend en outre :
lorsqu'un dispositif MTC s'attache initialement, la vérification, par l'entité de réseau, des informations du groupe de dispositifs MTC du dispositif MTC selon les informations du dispositif MTC, et lorsque le dispositif MTC appartient au groupe de dispositifs MTC créé, après que le dispositif MTC ait achevé l'attachement, l'envoi des informations du groupe de dispositifs MTC du dispositif MTC au dispositif MTC d'une manière sécurisée.

5. Procédé de réalisation d'une communication sécurisée entre des dispositifs de communication de type machine (MTC), comprenant :
l'envoi, par un dispositif MTC, d'une demande de communication directe à une entité de réseau, la demande de communication directe contenant des informations du dispositif MTC et des informations d'un autre dispositif MTC avec lequel le dispositif MTC doit communiquer directement ;
le dispositif MTC et l'autre dispositif MTC faisant partie d'un groupe MTC établi ;
la réception, par le dispositif MTC, d'informations du groupe de dispositifs MTC correspondant à un groupe de dispositifs MTC créé qui est constitué par des dispositifs MTC devant communiquer directement, à partir de l'entité de réseau, les informations du groupe de dispositifs MTC comprenant des informations d'identification du groupe de dispositifs MTC, des informations de clé du groupe de dispositifs MTC et une clé de cryptage générée à partir des informations de clé du groupe de dispositifs MTC ; une clé du groupe de dispositifs MTC étant utilisée en tant que clé partagée entre différents dispositifs MTC dans le groupe de dispositifs MTC créé, et la clé de cryptage étant utilisée pour protéger une communication sécurisée entre les différents dispositifs MTC dans le groupe de dispositifs MTC créé ; et
l'utilisation, par le dispositif MTC, de la clé de cryptage pour protéger une communication directe sécurisée avec l'autre dispositif MTC dans le groupe de dispositifs MTC créé auquel le dispositif MTC appartient.

6. Entité de réseau, comprenant une unité de création de groupe et une unité d'envoi, dans laquelle :
l'unité de création de groupe (901) est configurée pour :
recevoir une demande de communication directe à partir d'un dispositif MTC à communication directe, la demande de communication directe contenant des informations du dispositif MTC à communication directe et des informations d'un autre dispositif MTC avec lequel le dispositif MTC à communication directe doit communiquer directement ; le dispositif MTC à communication directe et l'autre dispositif MTC faisant partie d'un groupe MTC établi ;
créer un groupe de dispositifs MTC pour le dispositif MTC à communication directe, et enregistrer des informations du groupe de dispositifs MTC correspondant au groupe de dispositifs MTC créé et des informations de dispositif MTC des dispositifs MTC contenus dans le groupe de dispositifs MTC qui est constitué par les dispositifs MTC devant communiquer directement, les informations du groupe de dispositifs MTC comprenant des informations d'identification du groupe de dispositifs MTC et des informations de clé du groupe de dispositifs MTC ; une clé du groupe de dispositifs MTC étant utilisée en tant que clé partagée entre différents dispositifs MTC dans le groupe de dispositifs MTC créé, et étant utilisée pour protéger une communication sécurisée entre les différents dispositifs MTC dans le groupe de dispositifs MTC créé ;
l'unité de création de groupe (901) étant en outre configurée pour générer une clé de cryptage à partir des informations de clé du groupe de dispositifs MTC, et enregistrer la clé de cryptage dans les informations du groupe de dispositifs MTC ;
et
l'unité d'envoi (902) étant configurée pour envoyer les informations de groupe de dispositifs MTC du groupe de dispositifs MTC à tous les dispositifs MTC contenus dans le groupe de dispositifs MTC créé, qui établit alors une connexion sécurisée pour une communication directe en utilisant la clé de cryptage contenue dans les informations du groupe de dispositifs MTC.

7. Entité de réseau selon la revendication 6, dans laquelle :
l'unité de création de groupe (901) est établie dans un serveur d'abonné résidentiel (HSS), et l'unité de création de groupe crée un groupe de dispositifs MTC pour un dispositif MTC à communication directe de l'une quelconque des manières suivantes :
la création du groupe de dispositifs MTC pour un dispositif MTC qui doit communiquer directement selon une demande de création d'un abonné MTC ;
la création du groupe de dispositifs MTC pour un dispositif MTC qui doit communiquer directement dans une situation dans laquelle une demande de communication directe initiée par le dispositif MTC est reçue ; et
la création du groupe de dispositifs MTC pour un dispositif MTC qui doit communiquer directement selon une demande d'une entité qui gère la communication entre les dispositifs MTC.

8. Entité de réseau selon la revendication 6, dans laquelle :
l'unité de création de groupe (901) est établie dans une entité qui gère la communication entre les dispositifs MTC, et l'unité de création de groupe crée un groupe de dispositifs MTC pour un dispositif MTC à communication directe de l'une quelconque des manières suivantes :
la création du groupe de dispositifs MTC pour un dispositif MTC qui doit communiquer directement dans une situation dans laquelle l'entité qui gère la communication entre les dispositifs MTC reçoit la demande de communication directe initiée par le dispositif MTC ; et
la création du groupe de dispositifs MTC pour un dispositif MTC qui doit communiquer directement lorsque l'entité qui gère la communication entre les dispositifs MTC établit une communication directe entre les dispositifs MTC,
et dans laquelle l'entité qui gère la communication entre les dispositifs MTC est une station de base, une entité de gestion de mobilité (MME) ou un nœud de support du GPRS de desserte (SGSN).

9. Entité de réseau selon la revendication 7 ou 8, dans laquelle l'unité d'envoi (902) envoie les informations de groupe de dispositifs MTC du groupe de dispositifs MTC, auquel le dispositif MTC appartient, au dispositif MTC de la manière suivante :
lorsque l'unité de création de groupe crée le groupe de dispositifs MTC pour le dispositif MTC qui doit communiquer directement dans la situation dans laquelle l'unité de création de groupe reçoit la demande de communication directe initiée par le dispositif MTC, après que l'unité de création de groupe ait créé le groupe de dispositifs MTC, l'unité d'envoi envoie les informations du groupe de dispositifs MTC au dispositif MTC qui initie la demande de communication directe,
et dans laquelle :
l'unité d'envoi est en outre configurée, lorsqu'un dispositif MTC s'attache initialement, pour vérifier les informations de groupe de dispositifs MTC du dispositif MTC selon les informations du dispositif MTC, et lorsque le dispositif MTC appartient au groupe de dispositifs MTC créé, après que le dispositif MTC ait achevé l'attachement, envoyer les informations de groupe de dispositifs MTC du dispositif MTC au dispositif MTC d'une manière sécurisée.

10. Dispositif de communication de type machine (MTC), comprenant une unité de réception (1001) et une unité de communication (1002), dans lequel :
l'unité de communication (1002) est configurée pour envoyer une demande de communication directe à une entité de réseau, la demande de communication directe contenant des informations du dispositif MTC et des informations d'un autre dispositif MTC avec lequel le dispositif MTC doit communiquer directement ; le dispositif MTC et l'autre dispositif MTC faisant partie d'un groupe MTC établi ;
l'unité de réception (1001) est configurée pour recevoir des informations du groupe de dispositifs MTC correspondant à un groupe de dispositifs MTC créé qui est constitué par les dispositifs MTC devant communiquer directement, auquel le dispositif MTC appartient, à partir de l'entité de réseau, les informations du groupe de dispositifs MTC comprenant des informations d'identification du groupe de dispositifs MTC et des informations de clé du groupe de dispositifs MTC et une clé de cryptage générée à partir des informations de clé du groupe de dispositifs MTC ; une clé du groupe de dispositifs MTC étant utilisée en tant que clé partagée entre différents dispositifs MTC dans le groupe de dispositifs MTC créé, et la clé de cryptage étant utilisée pour protéger une communication sécurisée entre les différents dispositifs MTC dans le groupe de dispositifs MTC créé ; et
l'unité de communication (1002) est en outre configurée pour utiliser la clé de cryptage pour protéger une communication directe sécurisée avec l'autre dispositif MTC dans le groupe de dispositifs MTC créé auquel le dispositif MTC appartient.
